# EUROPEAN PATENT SPECIFICATION

(11) **EP 3 067 450 B1**
(45) Date of publication and mention of the grant of the patent: **12.08.2020**
(21) Application number: 16156370.5
(22) Date of filing: 18.02.2016
(51) Int. Cl.: D03D 1/00, F41H 5/04, B32B 5/02, D03D 13/00, D03D 11/00, B32B 5/00

(54) **WOVEN MULTI-LAYER FABRICS FOR USE WITH BALLISTIC THREATS**
MEHRSCHICHTIGES GEWEBE ZUR VERWENDUNG BEI BALLISTISCHEN BEDROHUNGEN
TISSUS MULTICOUCHES TISSÉS DESTINÉS À ÊTRE UTILISÉS CONTRE LES MENACES BALISTIQUES

(30) Priority: 18.02.2015 US 201562117733 P
(43) Date of publication of application: 14.09.2016
(73) Proprietor: Shahkarami, Shekoufeh, Cambridge, Ontario N1T 1S2 (CA); Krummel, Joseph, Cambridge, Onatrio N1T 1S2 (CA)
(72) Inventor: Shahkarami, Shekoufeh, Cambridge, Ontario N1T 1S2 (CA); Krummel, Joseph, Cambridge, Onatrio N1T 1S2 (CA)
(74) Representative: Murgitroyd & Company

(56) References cited:
- CA-A1- 2 759 965
- US-A1- 2013 071 642
- US-A1- 2014 124 085

## Description

### Technical Field

The embodiments herein relate to fabrics and in particular to woven fabrics for use in ballistic applications.

### Introduction

Woven fabrics are fabrics in which two or more distinct sets of yarns are interwoven with each other to form the fabric. Typically, woven fabrics include warp yarns that run lengthwise along the fabric and weft yarns that run across the length of the fabric, and which are interwoven with and generally perpendicular to the warp yarns.

In some ballistic applications, it is desired that two or more layers of woven fabrics be secured together. Conventionally, this may be done by providing the woven fabrics separately and then combining them to produce a multi-layer structure. For example, various fabric layers may be laid up and then joined together by resin. However, there are a several disadvantages to this technique. Firstly, since the woven fabrics are manufactured separately, this tends to result in higher associated costs. Furthermore, there may be issues related to the compatibility of the added resin to the fabric, or various types of ballistic threats which it might be subject to. Finally, there tend to be increased labor costs associated with laying up the layers of fabric.

In other known fabrics, multiple layers of woven fabric may be stitched together after being manufactured as separate layers. However, there tends to be a number of drawbacks with stitching layers together. Since stitched fabrics use needles that penetrate through the layers of yarn, gaps may be formed where the stitches are provided. Furthermore, the penetration of the needles may cause damage to the yarns. Both of these results are generally undesirable.

US2014/0124085A1 discloses a multi-layer ballistic woven fabric, including an upper woven layer and a lower woven layer. Securing yarns are interwoven with at least some upper and lower yarns of the upper and lower woven layers so as to secure the upper and lower woven layers together.

### Summary of the Invention

According to the present invention there is provided a multi-layer woven fabric, comprising:
a. a first fabric assembly comprising:
   i. a first upper woven layer having first upper warp yarns and first upper weft yarns that are interwoven together to form the first upper woven layer;
   ii. a first lower woven layer having first lower warp yarns and first lower weft yarns that are interwoven together to form the first lower woven layer; and
   iii. a first securing yarn interwoven with at least some of the first upper yarns and some of the first lower yarns so as to secure the first upper and first lower woven layers together; and
b. a second fabric assembly layered with the first fabric assembly, the second fabric assembly comprising:
   i. a second upper woven layer having second upper warp yarns and second upper weft yarns that are interwoven together to form the second upper woven layer;
   ii. a second lower woven layer having second lower warp yarns and second lower weft yarns that are interwoven together to form the second lower woven layer; and
   iii. a second securing yarn interwoven with at least some of the second upper yarns and some of the second lower yarns so as to secure the second upper and second lower woven layers together,
   wherein the first fabric assembly is arranged so that the first securing yarns run in a first direction and the second fabric assembly is arranged so that the second securing yarns run in a second direction, the second direction being different than the first direction;
   and wherein the woven fabric further comprises six additional fabric assemblies, wherein the six additional fabric assemblies are arranged with the first and the second fabric assemblies so that the fabric assemblies alternate between having their respective securing yarns running in the first direction and having their respective securing yarns running in the second direction.

### Brief Description of the Drawings

The drawings included herewith are for illustrating various examples of articles, methods, and apparatuses of the present specification and are not intended to limit the scope of what is taught in any way. In the drawings:
Figure 1 is an overhead perspective view of a multi-layer woven fabric ;
Figure 2 is a cross-sectional side view of the multi-layer woven fabric of Figure 1;
Figure 3A is a photo of a multi-layer fabric;
Figure 3B is a close-up view of the photo of Figure 3A;
Figure 4 is a photo of a multi-layer fabric having an offset weave;
Figure 5 is a flowchart illustrating a method of manufacturing a woven multi-layer fabric;
Figure 6 is a cross-sectional side view of a multi-layer fabric having an offset weave;
Figure 7 is a cross-sectional side view of a multi-layer fabric having an offset weave;
Figure 8 is a photo of a multi-layer fabric having a plain weave and satin weave checker pattern;
Figure 9 is a photo of a multi-layer fabric having a plain weave and satin weave checker pattern;
Figure 10 is a photo of a multi-layer fabric having a plain weave (the bottom layer) and satin weave (the top layer);
Figure 11 is a photo of a multi-layer fabric having a plain weave (the top layer) and satin weave (the bottom layer);
Figure 12 is a photo of a multi-layer fabric having two satin weave layers;
Figure 13 is a cross section side view of a multi-layer woven fabric, in accordance with the invention;
Figure 14 is a perspective view of the multi-layer woven fabric of Figure 13;
Figure 15 is a photo of a multi-layer woven fabric having securing yarns in different directions; and
Figure 16 is a flow chart of a method of manufacturing a woven multi-layer fabric.

### Detailed Description

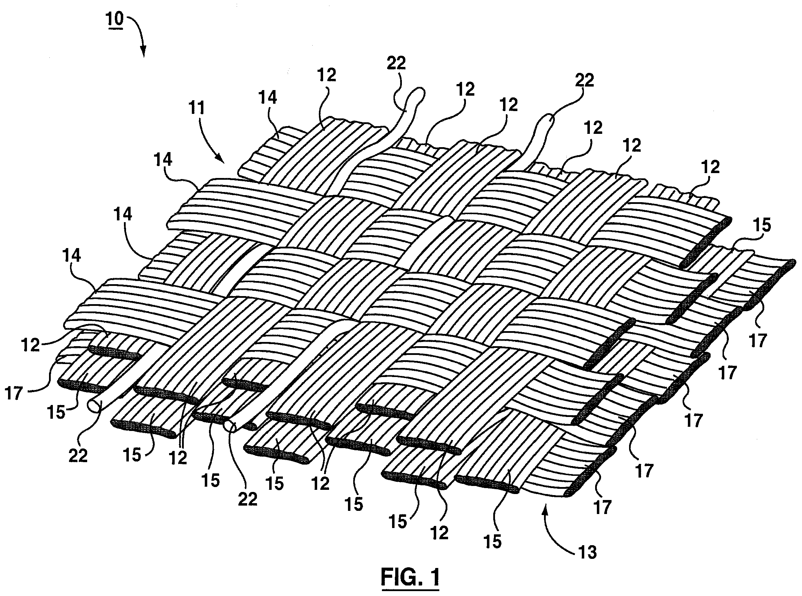

It should be noted that the fabrics shown in Figures 1-12 and 15 and described below do not form part of the present invention but instead represent background information useful for understanding the invention.

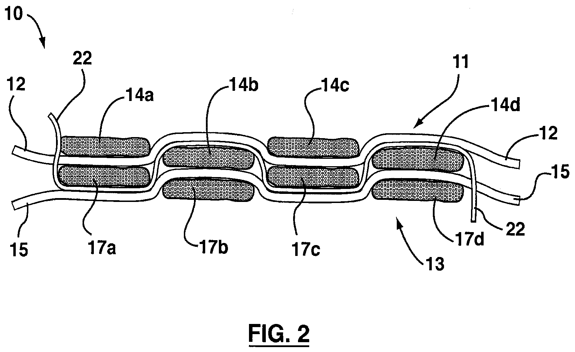

Generally illustrated in Figures 1 and 2 is a multi-layer fabric 10. The fabric 10 has a first (or upper) woven layer indicated generally as 11. The upper woven layer 11 includes first (or upper) warp yarns 12 and first (or upper) weft yarns 14 (e.g. 14a, 14b, 14c, 14d) that are interwoven together to form the first or upper woven layer 11. The first warp yarns 12 and first weft yarns 14 in the upper woven layer 11 are crimped, in the sense that each first yarn 12, 14 is bent around the other first yarns 12, 14 at crossover points or nodes to provide an interlocking or interwoven structure. The fabric 10 also has a second (or lower) woven layer indicated generally as 13. The lower woven layer 13 includes second (or lower) warp yarns 15 and second (or lower) weft yarns 17 (e.g. 17a, 17b, 17c, 17d) that are interwoven together to form the second or lower woven layer 13. The second warp yarns 15 and second weft yarns 17 in the second layer 13 are crimped, in the sense that each second yarn 15, 17 is bent around the other yarns 15, 17 at crossover points or nodes to provide an interwoven structure.

It will be appreciated that the terms "upper" and "lower" as used herein are used for convenience only, and the actual relative positions of the first or upper woven layer 11 and the second or lower woven layer 13 may be varied.

Generally the yarns of one layer are not interwoven with the yarns of another layer because such interweaving tends to increase the degree of crimp for the yarn in relation to rest of the yarns in the fabric, which can create ballistic weak points. In particular, the first or upper yarns 12, 14 are not interwoven with the second or lower yarns 15, 17, and vice versa. Instead, as shown, the first or upper layer 11 and second or lower layer 13 are secured together by one or more securing yarns 22. The securing yarns 22 are interwoven with at least some of the upper yarns 12, 14 and some of the lower yarns 15, 17 so as to secure the upper and lower layers 11, 13 together.

The securing yarns 22 generally form part of the woven fabric 10. In particular, the woven fabric 10 is formed by interweaving the securing yarns 22 with the warp yarns 12, 15 and weft yarns 14, 17 as the fabric 10 is formed. Therefore, the upper and lower woven layers 11, 13 can be secured together without the need for stitching, resin or other mechanisms to join the woven layers 11, 13 together.

In this manner, a fabric 10 having two (or more) woven layers 11, 13 can be manufactured as a unified construction, without the need for joining two different fabric layers together after being formed individually.

Manufacturing the fabric as a unified construction also tends to provide a lower crimp level for each layer, which tends to maintain or improve potential ballistic performance of the individual layers while achieving additional advantages associated with securing the layers together, such as higher integrity, enhanced trauma and overall ballistic performance as well as manufacturing advantages.

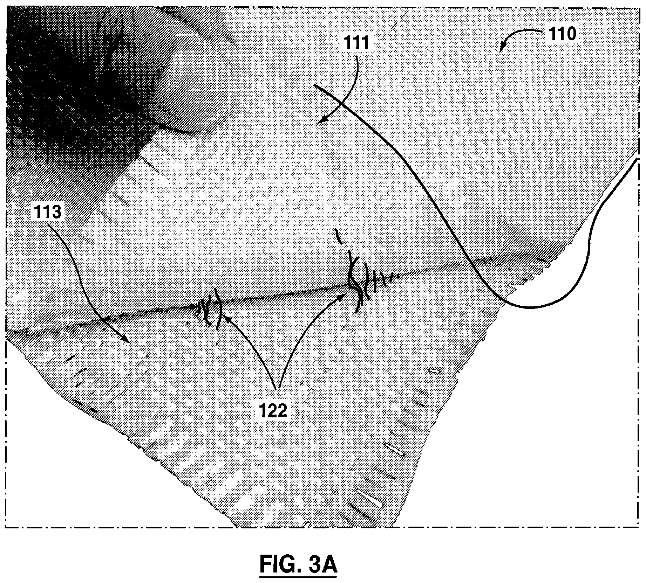

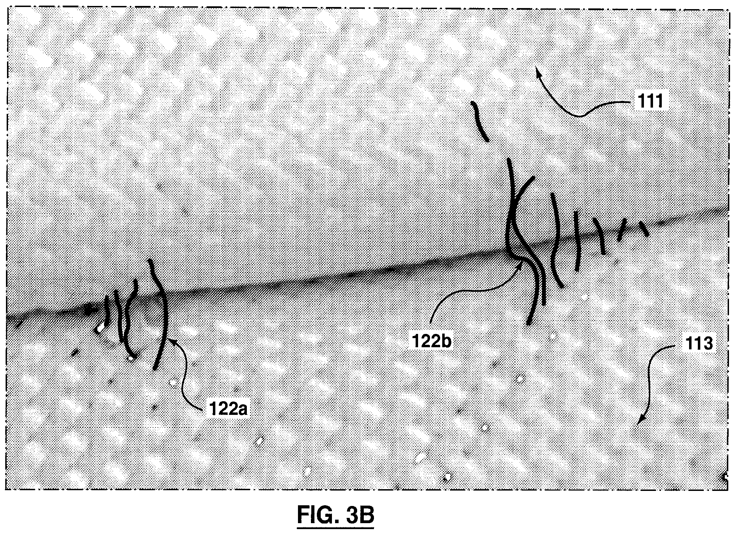

As shown, in some embodiments the securing yarns 22 may be aligned with the warp or weft yarns. For example, the securing yarns 22 may be generally parallel to or aligned with the warp yarns 12, 15 and generally perpendicular to the weft yarns 14, 17. In other embodiments, the securing yarns 22 may be generally parallel to or aligned with the weft yarns 14, 17 and generally perpendicular to the warp yarns 12, 15. according to the invention (e.g. as shown in Figure 3), securing yarns 22 may be provided in both the warp and weft directions (e.g. in a checker pattern) with at least some securing yarns 22 parallel to the warp yarns 12, 15 while at least some other securing yarns 22 are parallel to the weft yarns 14, 17.

Turning now specifically to Figure 2, illustrated therein is a cross-sectional side view of the woven multi-layer fabric 10. As shown, (from left to right on Figure 2) one of the securing yarns 22 extends from above the upper layer 11 and passes underneath a first lower weft yarn 17a (of the lower weft yarns 17), then over a second upper weft yarn 14b (of the upper weft yarns 14, and generally next to or adjacent the first lower weft yarn 17a), then underneath a third lower weft yarn 17c (generally next to or adjacent the second upper weft yarn 14b), and then above a fourth upper weft yarn 14d (generally next to or adjacent the third lower weft yarn 17c) and then extends below the lower layer 13. In this manner the securing yarn 22 tends to secure the upper weft yarns 14 and the lower weft yarns 17 together, thus joining the first woven layer 11 and the second woven layer 13.

While the illustrated fabric shows a securing yarn extending over and under one weft yarn at a time, in other fabrics, the securing yarns may extend over or under more than one weft yarn at a time. For example, the securing yarns may be woven underneath two weft yarns, and then above five upper weft yarns adjacent the lower weft yarns. Accordingly, the securing yarns may be woven underneath at least one lower weft yarn, and then above at least one upper weft yarn adjacent the at least one lower weft yarn.

In some embodiments, one or more of the warp yarns 12, 15 and/or weft yarns 14, 17 could be used in addition to, or in place of, one or more securing yarns 22 for holding the two or more layers together. For example, one or more the of the warp yarns 12, 15 and/or the weft yarns 14, 17 could be interwoven along a path similar to the path of the securing yarn 22 as shown in Figure 2 to secure the first layer 11 to the second layer 13.

Each of the warp yarns 12, 15 and weft yarns 14, 17 and securing yarns 22 may include a plurality of fibers or filaments of one or more materials as will be described in greater detail below.

In some embodiments, the selection and arrangement of the securing yarns 22 may be varied to obtain desired performance of the fabric 10. For example, the size, ratio and/or spacing of securing yarns 22 may be different in different embodiments of the fabric 10.

In some embodiments, a plurality of securing yarns 22 could be spaced apart from each other by a distance of between 2.54 cm (one inch) and 7.62 cm (three inches). In other embodiments, securing yarns 22 may be spaced apart by a distance of less than 2.54 cm (one inch). In yet other embodiments, securing yarns may be spaced apart by a distance of more than 7.62 cm (three inches).

The ratio between securing yarns 22 and ballistic yarns (e.g. warp yarns 12, 15 and weft yarns 14, 17) as well as the spacing therebetween tends to depend on the desired inter-layer stability (e.g. providing more securing yarns 22
and/or providing securing yarns 22 spaced closer together tend to result in a more stable fabric 10) versus the degree of interference between the woven layers 11, 13 (e.g. more securing yarns 22 tend to result in the woven portions deviating more from a conventional woven fabric, e.g. which may cause more distortion between the woven fabric layers).

In some embodiments, the securing yarns 22 are made from a high elongation yarn, a low strength, and/or a low modulus yarn, as generally described below.

In some embodiments, the warp yarns 12, 15 and weft yarns 14, 17 are ballistic yarns. For example, the warp yarns 12, 15 and weft yarns 14, 17 may be ballistic yarns having a tenacity of about 132.7 N/Tex (15 grams per denier) and higher, and with a tensile modulus of at least about 3539.8 N/Tex (400 grams per denier).

Some examples of suitable yarns could include carbon, basalt and glass fibers. Other examples include aramid and copolymer aramid fibers (produced commercially by DuPont and Teijin under the trade names Kevlar®, Twaron®, and Technora®), extended chain polyethylene fibers (produced commercially by Honeywell, and DSM, under the trade names Spectra®, and Dyneema®), polyethylene fibers and films produced by Synthetic Industries and sold under the trade name Tensylon®, poly(p-phenylene-2,6-benzobisoxa-zole) (PBO) (produced by Toyobo under the commercial name Zylon®), and Liquid crystal polymers produced by Kuraray under the trade name Vectran®. Other suitable yarns may also be used.

In some embodiments, the securing yarns 22 are generally of significantly smaller denier than the warp yarns 12, 15 and/or weft yarns 14, 17 and may have significantly lower tenacities and tensile moduli. As a result, the securing yarns 22 tend to greatly reduce or eliminate undesirable deflection or distortion of the first and second layers 11, 13. In particular, the securing yarn 22 may be substantially crimped while it may be desirable to have the layers 11, 13 be as flat as possible.

In some examples, the securing yarns 22 have a tenacity of less than about 88.4 N/ Tex (10 grams per denier), and a tensile modulus of less than about 353.6 N/Tex (40 grams per denier). In one example, the securing yarns 22 are made of a 78 dtex Nylon, while the warp yarns 12, 15 and weft yarns 14, 17 may be made of a 333 tex (3000 denier) aramid (e.g. Kevlar®)

In some examples, the denier of the securing yarns 22 may range from between about 2.22 tex (20 denier) (or less), to about 111 tex (1000 denier), depending on the size of the warp yarns 12, 15 and weft yarns 14, 17, and the desired ballistic applications.

In some alternative examples, the same yarn that is used in the woven body of either fabric layer may be used as a securing yarn to tie the two or more layers of fabric together (i.e., the warp and/or weft yarns could be used as securing yarns).

In some embodiments, the securing yarns 22 may be generally of a much smaller size than the warp yarns 12, 15 and weft yarns 14, 17. The diameter of the securing yarns 22 may be selected based on the moduli and strength parameters of the securing yarns 22. In some embodiments, where the securing yarns 22 are made of non-ballistic yarns (e.g. Nylon, etc.), it may be desirable that the securing yarns 22 be high elongation yarns that are as stretchy as possible and as small as possible.

In some examples, the securing yarns 22 may be selected from a wide range of fibers. Some suitable example fibers include natural fibers, such as cotton, wool, sisal, linen, jute and silk. Other suitable fibers include manmade or synthetic fibers and filaments, such as regenerated cellulose, rayon, polynosic rayon and cellulose esters, synthetic fibers and filaments, such as acrylics, polyacrylonitrile, modacrylics such as acrylonitrile-vinyl chloride copolymers, polyamides, for example, polyhexamethylene adipamide (nylon 66), polycaproamide (nylon 6), polyundecanoamide (nylon 11), polyolefin, for example, polyethylene and polypropylene, polyester, for example, polyethylene
terephthalate, rubber and synthetic rubber and saran. Glass, carbon or any other high performance fiber may also be used .

Staple yarns may also be used and may include any of the above fibers, low denier staple yarns or any combination of these yarns. Staple yarns, by the discontinuous nature of their filaments that form the yarn, tend to have much lower tensile and modulus properties as opposed to yarns composed of continuous filaments.

The performance of the fabric 10 is generally a function of the properties of the securing yarns 22 and the warp yarns 12, 15 and weft yarns 14, 17. In ballistic fabrics, maximizing the amount of the ballistic fibres (e.g. the warp yarns 12, 15 and the weft yarns 14, 17) in a given volume tends to be beneficial, as higher fibre to volume ratio fraction generally signifies improved ballistic properties. Therefore, in some examples it may be desirable that the securing yarns 22 have a denier that is as low as practical while still being able to weave the fabric 10.

In the fabric 10, it may be desirable to minimize the weight of the securing yarns 22 as a percentage of the total weight of the fabric 10, since the securing yarns 22 may not contribute as much to the strength of the fabric 10 as the ballistic yarns (e.g. the warp yarns 12, 15 and the weft yarns 14, 17). Conversely, an increased quantity of securing yarns 22 may result in a more durable, stable fabric 10; however, the fabric 10 may tend to be heavier.

In some examples, the securing yarns 22 may be selected to have the lowest denier, and the lowest strength as practical that can be woven between the layers, and that satisfy the requirements for a particular ballistic application.

In some embodiments, two or more fabrics 10 may be joined together to form a ballistic member having four or more woven layers (e.g. two fabrics
10 may be joined using a resin, film or other suitable techniques to form a fabric that has four woven layers).

The fabric 10 may also be fabricated into a prepreg using a film or a wet resin. Depending on the application, the film or resin may be applied to one side of the fabric 10, the fabric 10 may be totally impregnated with a resin, or the film may be worked into the fabric 10. In some examples, the film or resin may be a thermoplastic or a thermoset resin. Generally, any resin or film that can be used to create a prepreg may be used with this fabric 10. In some embodiments, two or more layers of fabric 10 may be laminated together to further increase the number of layers.

In some embodiments, three or more woven layers may be secured together to form a fabric using one or more securing yarns that are interwoven as the fabric is being made.

Turning now to Figures 3A and 3B, illustrated therein is a fabric 110. . The fabric 110 has a first woven layer 111 (e.g. having first interwoven warp and weft yarns) and a second woven layer 113 (e.g. having second interwoven warp and weft yarns). The first and second layers 111, 113 are secured together by securing yarns 122 that are interwoven with the first and second warp and weft yarns as the fabric 110 is woven together.

Referring now to the close up of Figure 3B, the fabric 110 is being pulled apart to reveal the securing yarns 122 in more detail. In particular, first securing yarns 122a are oriented in a first direction (e.g. the warp direction) while second securing yarns 122b are oriented in a second direction (e.g. the weft direction).

A multi-layer woven fabric according to Figures 3A and 3B was created and tested in a ballistic 9mm V50 test. In particular, a woven multi-layer fabric as generally described herein made of 3360 dtex aramid was compared to a traditional fabric with separate layers laminated together using a resin. The V50 ballistic test for these fabrics were conducted in a standard setting for a 40.6 cm (16")x 40.6 cm(16") pack using a 9mm Remington and at 3.64 Kg/m^2 (0.75 Ib/ft2) for both samples, with the following results:

| **Product Description** | **Fabric Areal Density** | **Ballistic Pack Areal Density** | | **Ballistic 9mm V50** | |
|---|---|---|---|---|---|
| | **Dry (g/m2)** | **Ib/ft2** | **Kg/m2** | **ft/s** | **m/s** |
| Conventional Aramid 3360 dtex 1x1 Plain, 2 layer laminate | 606 | 0.75 | 3.64 | 1112 | 339 |
| New Woven Multi-layer Aramid 3360 dtex 2L Plain, 2 layer laminate | 1212 | 0.75 | 3.64 | 1125 | 343 |

As shown, the woven multi-layer fabric tends to provide similar performance as a conventional fabric while providing at least some of the advantages as generally described herein. For example, the new multi-layer fabric has gone through about half the number of processing steps in comparison to the conventional fabric, which is advantageous for both performance and cost.

ln some embodiments, the multi-layer fabric might be used with a resin. If the fabric has high adhesion to the resin, the securing yarn can dissipate energy by breaking during the ballistic event while the resin keeps the other layers together and prevents trauma.

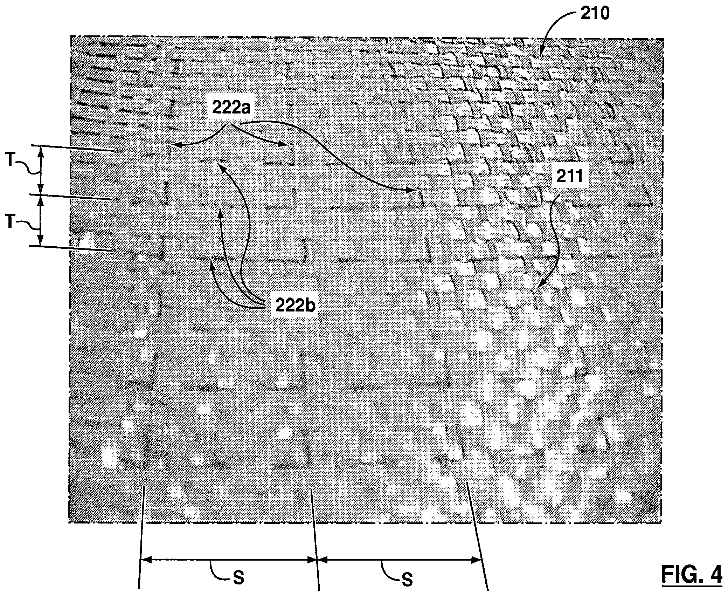

Turning now to Figure 4, illustrated therein is a fabric 210 in which the fabric 210 has an offset weave. In particular, the fabric 210 has two separate layers: namely a first or upper layer 211 and a second or lower layer (not shown). In this fabric 210, the upper and lower warps and wefts are offset. In particular, the upper warp yarns are not sitting on top of the lower warp yarns, but rather are sitting beside each other (e.g. are at least slightly offset), and the upper weft yarns are not sitting on top of the lower weft yarns, but rather are sitting beside each other (e.g. are at least slightly offset). This offset weave generally provides the fabric 210 with more room to spread out, resulting is less squishing or crimping of the fabric 210.

The offset design also tends to improve ballistic performance by reducing the number and/or size of openings between yarns in the fabric because the yarns of one layer cover openings in the adjacent layer, as described below.

In some ballistic applications, it is sometimes desirable to lower the cover factor of the fabric (e.g. by spacing apart yarns and providing openings therebetween) in order to increase the number of fabric layers in a pack for a given areal density. The increased number of fabric layers tends to enhance the ballistic V50 performance. However, there is a limit to the increase in performance because having a cover factor that is too low results in an open construction, which tends to increase the bullet penetration during a ballistic event and hence lowers the ballistic resistance. The offset design described above tends to enhance ballistic performance for a given yarn size and ballistic areal density by providing the layering effect while covering the openings in each layer with the yarns of the adjacent layer as the two layers are interwoven in an offset layering pattern.

In some embodiments, some of the warp yarns and/or weft yarns may at least partially overlap, which the inventor believes may tend to increase the ballistic performance.

As shown, the first layer 211 and second layer are secured together by a plurality of first securing yarns 222a and a plurality of second 222b (generally similar to the securing yarns 22 as described above) that are generally perpendicular to each other and which are arranged in an array or pattern. For example, the first securing yarns 222a may be oriented in a first direction (e.g. the warp direction), while the second securing yarns 222b may be oriented in a second direction (e.g. the weft direction).

As shown, the first securing yarns 222a may be separated from each other by a first spacing T, while the second securing yarns 222b may be separated from each other by a second spacing S. The first and second spacings T, S may be similar or different. Generally, the spacings T, S may be selected so as to obtain desired properties for the fabric 210.

In some embodiments, the first spacing T may be between 2.54 cm (one inch) and 7.62 cm (three inches). In other embodiments, the first spacing T may be less than 2.54 cm (one inch), or more than 7.62 cm (three inches).

In some embodiments, the second spacing S may be between 2.54 cm (one inch) and 7.62 cm (three inches). In other embodiments, the second spacing S may be less than 2.54 cm (one inch), or more than 7.62 cm (three inches).

According to the invention, the layers of fabric may be secured using securing yarns that extend in only one direction (e.g. the weft direction only).

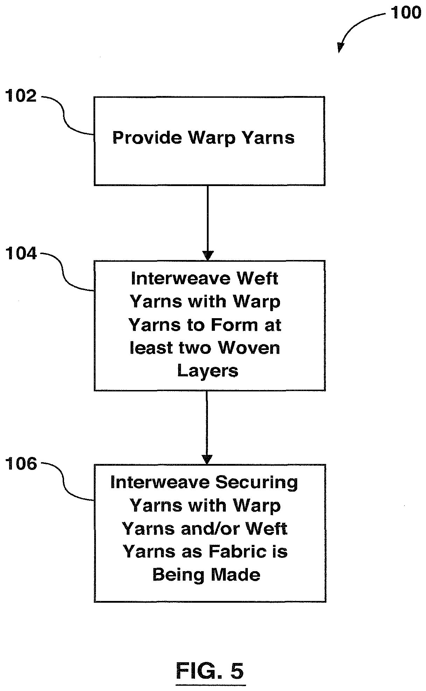

Turning now to Figure 5, illustrated therein is a method 100 of forming a multi-layer woven fabric.

At step 102, warp yarns are provided. For example, first warp yarns 12 and second warp yarns 15 may be provided on a loom or weaving machine (e.g. standard 2D weaving looms, including rapier, shuttle, air jet and water jet looms).

At step 104, weft yarns are interwoven with the warp yarns to form at least two woven layers (e.g. a first woven layer and a second woven layer). For example, the first weft yarns 14 could be interwoven with the first warp yarns 12 by alternatively moving the first warp yarns 12 up and down and passing a shuttle with the first weft yarns 14 therebetween, as will generally be understood. Similarly, the second warp yarns 15 could be interwoven with the second weft yarns 17 to form the second woven layer 13.

At step 106, the securing yarns are interwoven with the warp yarns and/or the weft yarns as the fabric is being made (e.g. as the weft yarns and warp yarns are being woven together) to secure the first and second woven layers together. For example, the securing yarns 22 may be alternatively interwoven with the first and second warp yarns 12, 15 by selectively moving the warp yarns 12, 15 up and down and passing a shuttle with the securing yarns 22 therethrough as the warp yarns 12, 15 and weft yarns 15, 17 are being woven together.

It will be appreciated that the steps 102, 104 and 106 of the method 110 generally do not have to be done in a specific order and that the order as listed is in no way meant to be limiting.

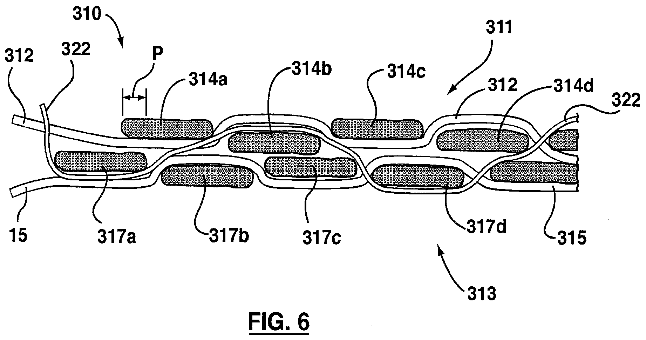

Turning now to Figure 6, illustrated therein is another fabric 310 having an upper layer 311 that is offset from the lower layer 313. For example, the fabric 310 may be similar to the fabric 210 described previously.

The upper woven layer 311 includes warp yarns 312 and upper weft yarns 314 (e.g. 314a, 314b, 314c, 314d) that are interwoven together to form the first or upper woven layer 311. The lower woven layer 313 includes lower warp yarns 315 and lower weft yarns 317 (e.g. 317a, 317b, 317c, 317d) that are interwoven together to form the second or lower woven layer 313. The upper and lower woven layers 311, 313 are secured together using one or more securing yarns 322 generally as described previously.

As shown, the upper weft yarns 314 and lower weft yarns 317 are offset so that, for example, the first upper weft yarn 314a overlaps the first lower weft yarn 317a by an overlap amount P. Accordingly, the securing yarn 322 tends to be less crimped and more spread out (as compared to the more compact path of the securing yarn 22 described above).

In some embodiments, the overlap amount P is between 10% and 95%. In other embodiments, the overlap amount P is between 30% and 70%. In other embodiments, the overlap amount is around 50%.

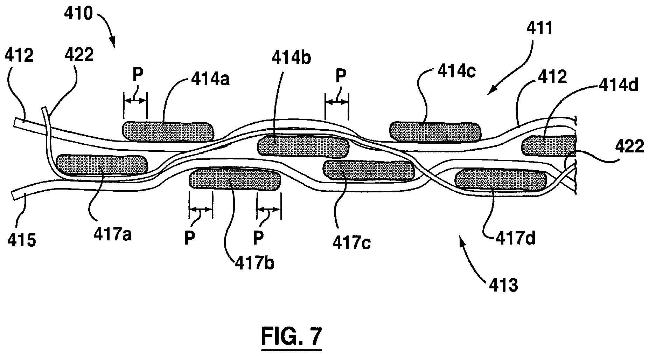

Turning now to Figure 7, illustrated therein is a fabric 410 Fabric 410 has an upper layer 411 that is offset from the lower layer 413.

The upper woven layer 411 includes warp yarns 412 and upper weft yarns 414 (e.g. 414a, 414b, 414c, 414d) that are interwoven together to form the first or upper woven layer 411. The lower woven layer 413 includes lower warp yarns 415 and lower weft yarns 417 (e.g. 417a, 417b, 417c, 417d) that are interwoven together to form the second or lower woven layer 413. The upper and lower woven layers 411, 413 are secured together using one or more securing yarns 422 generally as described above.

As shown, the upper weft yarns 414 and lower weft yarns 417 are offset similar to the fabric 310, so that, for example, the first upper weft yarn 414a overlaps the first lower weft yarn 417a by an overlap amount P. In this embodiment, the upper weft yarns 414 and lower weft yarns 417 are generally more evenly spaced apart by the overlap distance P.

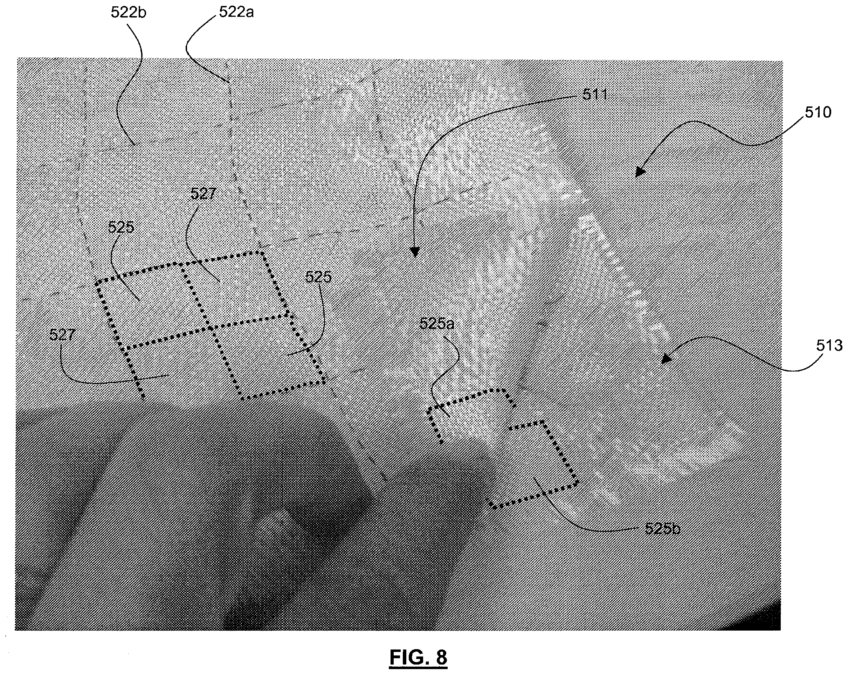

Turning now to Figure 8, illustrated therein is a multi-lawyer woven fabric 510. The fabric 510 generally includes an upper woven layer 511 and lower woven layer 513 secured together using first securing yarns 522a and second securing yarns 522b generally as described previously. In this embodiment, the upper woven layer 511 and lower woven layer 513 each have a "checkered" pattern made up of adjacent plain woven portions 525 (e.g. portions of the layers 511, 513 with a plain weave) and satin woven portions 527 (e.g. portions of the layers 511, 513 with a satin weave). These types of woven layers may be referred to as Platin(TM) and are described more generally in PCT International Patent Application Publication Numbers WO2009153120 and WO2009153121.

The plain woven portions 525 and satin woven portions of the upper and lower layers 511, 513 are aligned. For example, as shown a first plain woven portion 525a on the upper layer 511 is aligned with and positioned above a second plain woven portion 525b on the lower layer.

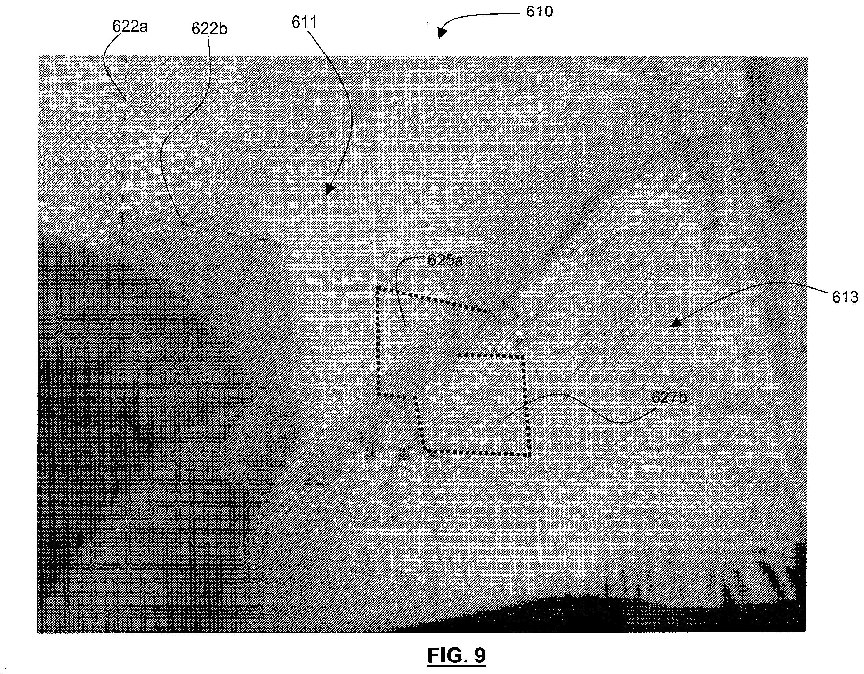

Turning now to Figure 9 illustrated therein is a multi-lawyer woven fabric 610. The fabric 610 is similar to fabric 510 and generally includes an upper woven layer 611 and lower woven layer 613 secured together using first securing yarns 622a and second securing yarns 622b generally as described previously. However, in this embodiments the "checked" plain woven and satin portions are staggered with respect to each other. For example, as shown a first plain woven portion 625a on the upper layer 611 is aligned with and positioned above a second satin woven portion 627b on the lower layer 613.

While the fabrics of Figures 8 and 9 have Platin(TM) layers arranged so that the woven portions and satin portions are either matching or opposite, in some fabrics, the Platin(TM) layers may be arranged in a random design such that the woven portions and satin portions of each layer are offset from each other, opposed to being aligned in either matching or opposite patterns.

Multi-layer woven fabrics made with Platin(TM), and as described above, were created and tested in a ballistic 9mm V50 test, with the following results:

| **Product Description** | **Ballistic Pack Areal Density** | | **Ballistic 9mm V50** | |
|---|---|---|---|---|
| | **Ib/ft2** | **Kg/m2** | **ft/s** | **m/s** |
| 2 layer Platin with matching patterns | 1.1 | 5.4 | 1505 | 459 |
| 2 layer Platin with opposite patterns | 1.1 | 5.4 | 1496 | 456 |
| 2 layer Platin with random design | 1.1 | 5.4 | 1470 | 448 |

As show, the performance of the 2 layer Platin fabric with matching patterns performed better than the other two fabrics.

A multi-layer woven fabric with offset woven layers was created and tested in a ballistic 9mm test as well as a .22 CAL 17 grain FSP test and compared to a plain fabric. The offset woven layers were secured together using securing yarns aligned with the weft yarns only. The securing yarns were spaced separated by a spacing of about a 0.635 cm (1/4 of an inch). The ballistic tests for these fabrics were conducted in a standard setting for a 40.6 cm (16")x 40.6 cm (16") pack using a 9mm Remington and a .22 CAL FSP at an areal density of 5.4 Kg/m^2 (1.1 Ib/ft2) for both samples, with the following results:

| | | **Areal Density (of the layer)** | **Areal Density (of the pack)** | **17 grain** | **9mm** |
|---|---|---|---|---|---|
| **Fabric, all greige, aramid 930 dtex** | **# ]of layers** | **g/m²** | **(Psf) Kg/m^2** | **@** 5.4 Kg/m^2 **(1.1 psf)** | @5.4 Kg/m^2 **(1.1 psf)** |
| Offset | 23 | 233 | 5.4(1.10) | **654** | 521 |
| Plain Fabric | 26 | 207 | 5.419(1.11) | **622** | 502 |

The performance in the 9mm and .22 CAL FSP tests were both improved. Furthermore, the performance in the .22 CAL FSP test was improved with the offset fabric by 33 feet (10.06m), an increase of approximately 5.3%.

The new fabric with offset woven layers had a higher performance in both tests with fewer layers of fabric. This is despite the conventional understanding that a fabric having a lower cover factor and more layers of fabric for a given areal density should perform better. The inventor believes that the increased performance is due to the offset design, in which the coverage for each yarn within the fabric structure is maximized by having each direction yarn (warp or weft) sitting at two levels with overlaps.

While the fabric tested utilized securing yarns aligned with the weft yarns and spaced apart by about a 0.635 cm (1/4 of an inch), in fabrics, the securing yarns may be aligned with the warp yarns and/or the weft yarns, and may be separated by a spacing of less than 7.62 cm (three inches).

### Additional Example

According to another example, a multilayer fabric was woven at about 100% cover factor for each of the layers in a two layer woven fabric. The fabric yarn size was 550 dtex, which is higher than yarn sizes commonly used in spike protection.

Lower yarn sizes tend to be advantageous is spike resistance. In particular, spike resistance tends to deteriorate as the yarn sizes increase to a point that the weight disadvantage of additional fabric layers for higher denier yarns prohibits the viability of the product from both a weight and cost point of view.

However, in this example, the 550 dtex yarn size (which is not a common yarn size used in traditional spike applications) was explored and made into a woven fabric according to the teachings herein. The scoured fabric layers were then tested at Barrday's internal lab and in accordance with the 'National Institute of Justice (NIJ) Standard 0115.00-Stab Resistance of Personal Body Armor'. These test protocols and test conditions are defined in the NIJ spec, as well as the definitions for various energy levels.

The following table summarizes the test results for this fabric, and indicate that this fabric is a viable solution for spike resistance even though it is at a higher yarn size of 550 dtex.

**NIJ test results for 550 dtex**

| **Description** | **Dry W** | **NIJ Spike level** | **Layer#** | **AD(psf)** |
|---|---|---|---|---|
| 550 dtex SOS45 | 400 | L1E2 | 4 | 0.33 |
| | | L2E2 | 6 | 0.49 |
| | | L3E2 | 6 | 0.49 |

The fabrics described herein may generally be used in any combination with the materials listed above and may replace any one material or combination of materials in an existing ballistic fabric. In addition, the fabrics described herein may be laminated together or laminated with films to produce ballistic elements for various applications, including soft armor applications, hard armor applications, and rigid and/or semi-rigid applications. The proportions of each material selected and the design of the ballistic elements may vary depending on the intended application (i.e. particular specifications for military or police applications).

Generally, the multi-layer fabrics described herein utilize a unique technique to secure fabric layers together and limit the use of extra stitching and resin application unless desired for providing particular properties.

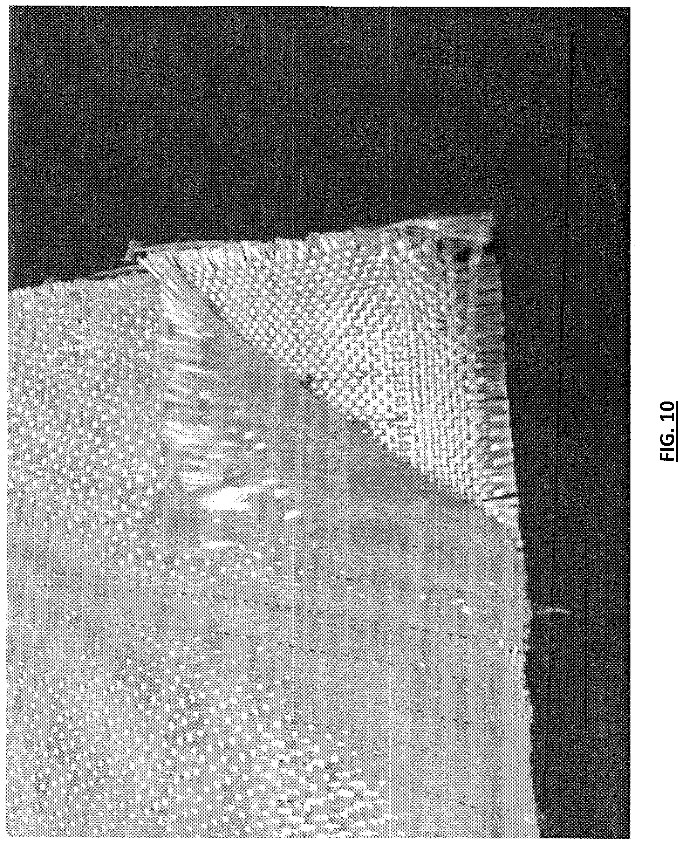

Turning now to Figure 10, illustrated therein is a multi-layer fabric having a plain weave (the bottom layer) and satin weave (the top layer).

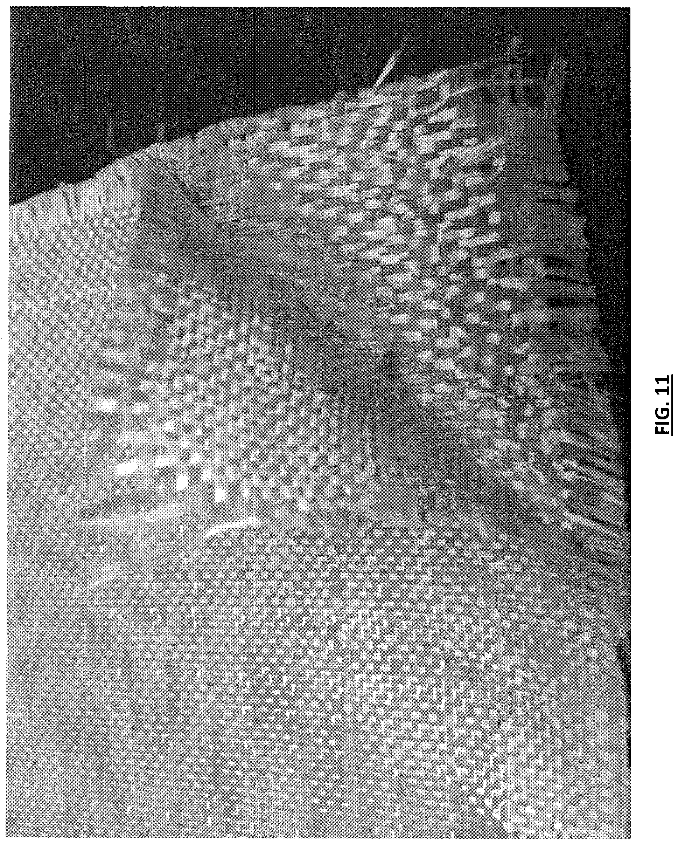

Similarly, Figure 11 shows a multi-layer fabric having a plain weave (the top layer) and satin weave (the bottom layer).

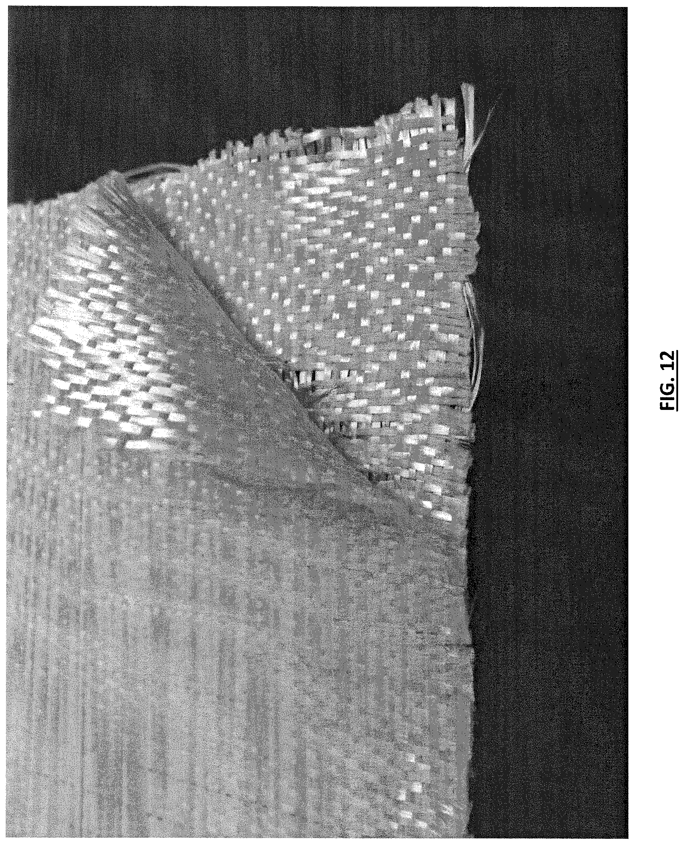

Figure 12 shows a multi-layer fabric having two satin weave layers.

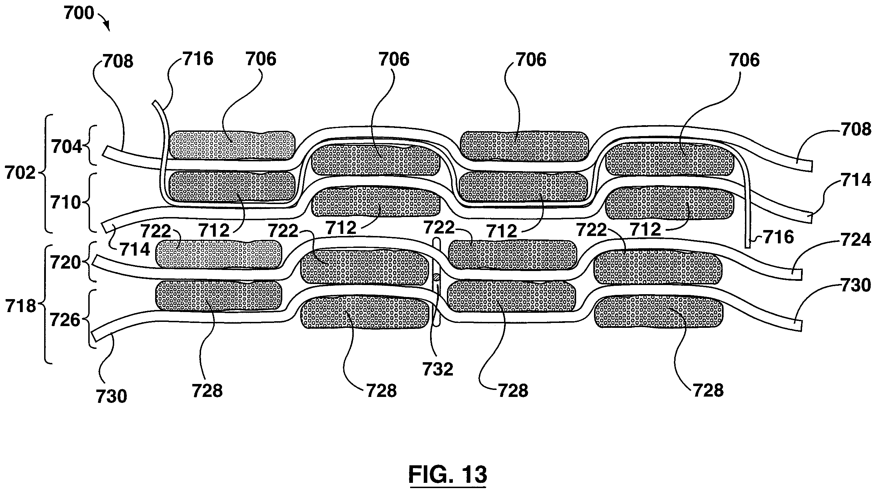

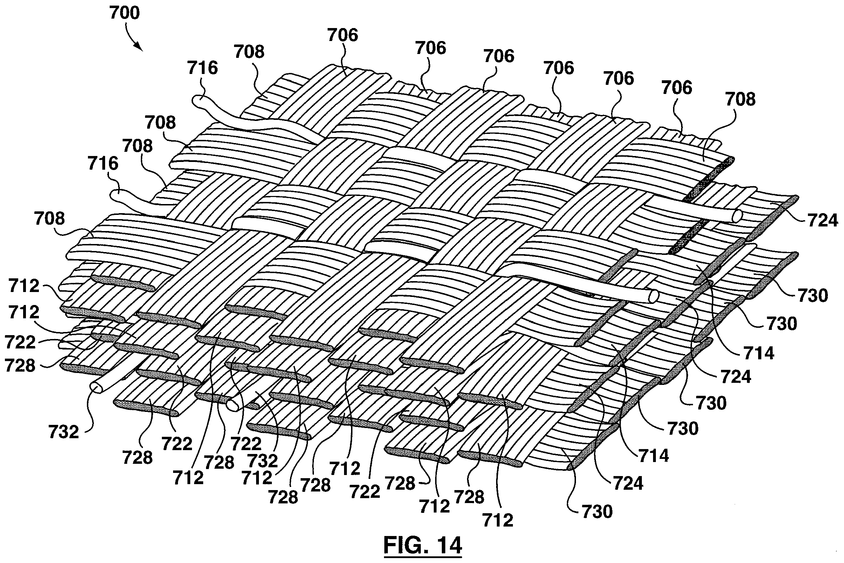

Figures 13 and 14 show a multi-layer fabric 700 in accordance with the invention. The multi-layer woven fabric 700 includes a plurality of fabric assemblies: a first fabric assembly 702 and a second fabric assembly 718. While Figures 13 and 14 show two fabric assemblies, at least six additional assemblies are used to make the multi-layer woven fabric, as desired. The first and second fabric assemblies 702, 718 may be those described with reference to Figures 1, 2, 6, and 7.

The first fabric assembly 702 includes a plurality of woven lawyers (first upper woven layer 704 and first lower woven layer 710) and a first securing yarn 716. In an embodiment, the first fabric assembly 702 may include two layers (as shown in Figures 13 and 14), three layers, four layers, or more layers, as desired.

The first upper woven layer 704 has first upper weft yarns 706 and first upper warp yarns 708 that are interwoven together to form the first upper woven layer 704. The first lower woven layer 710 has first lower weft yarns 712 and first lower warp yarns 714 that are interwoven together to form the first lower woven layer 710.

The first securing yarn 716 is interwoven with at least some of the first upper yarns 706, 708 and some of the first lower yarns 712, 714 so as to secure the first upper woven layer 706 and first lower woven layers 710. The first securing yarn 716 is interwoven with the first yarns 706, 708, 712, 714 in a first direction, for example the warp direction.

The second fabric assembly 718 is layered with and may be secured to the first fabric assembly 702. Similar to the first fabric assembly 702, the second fabric assembly 718 includes a plurality of woven layers (second upper woven layer 720 and second lower woven layer 726) and a second securing yarn 732.

The second upper woven layer 720 has second upper warp yarns 722 and second upper weft yarns 724 that are interwoven together to form the second upper woven layer 720. The second lower woven layer 726 has second lower warp yarns 728 and second lower weft yarns 730 that are interwoven together to form the second lower woven layer 726.

The second securing yarn 732 is interwoven with at least some of the second upper yarns 722, 724 and some of the second lower yarns 728, 730 so as to secure the second upper woven layers 720 and second lower woven layers 726 together. The second securing yarn 732 is interwoven with the second yarns 722, 724, 728, 730 in a second direction.

The first fabric assembly 702 and the second fabric assembly 718 are assembled such that the second securing yarn 732 runs in a different direction from the first securing yarn 716. In an embodiment, the first securing yarn 716 runs substantially perpendicularly (e.g. 90 degrees) to the second securing yarn 732.

In an embodiment, the first fabric assembly 702 and the second fabric assembly 718 are assembled together by a stitching yarn, for example, as on the periphery during assembly. In a further embodiment, the first and second fabric assemblies 702, 718 are assembled with further fabric layers.

The multi-layer fabric 700 may have increased strength as the securing yarns 716, 732 provide securing strength in different directions.

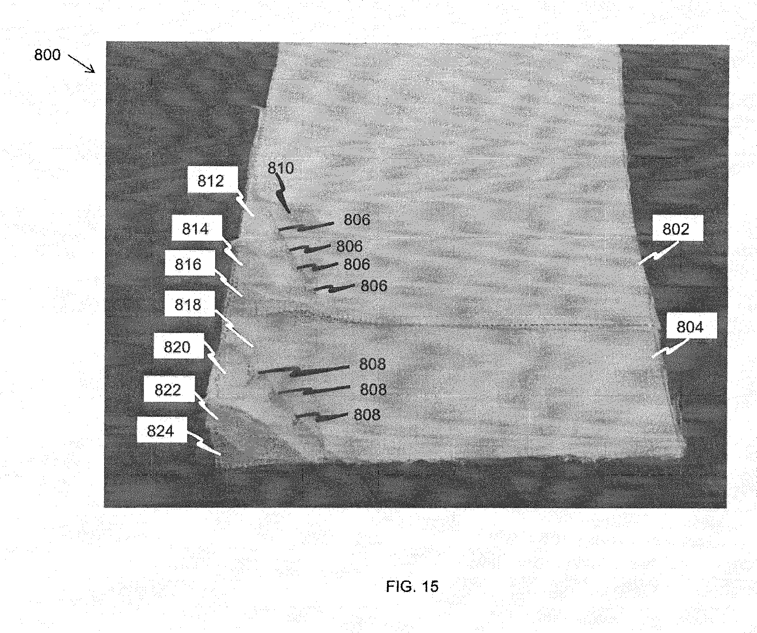

Figure 15 shows a 66.7 tex (600d) Kevlar KM2 PLUS multi-layer fabric 800. The multi-layer fabric 800 has a first fabric assembly 802 and second fabric assembly 804 with first and second sets of securing yarns 806, 808 running in different directions. Each of the first and second fabric assemblies 802, 804 have four fabric layers. The first fabric assembly 802 has four fabric layers 810, 812, 814, 816 and securing yarns 806 travelling left-right. The second fabric assembly 804 as four fabric layers 818, 820, 822, 824 with securing yarns 808 traveling top-bottom.

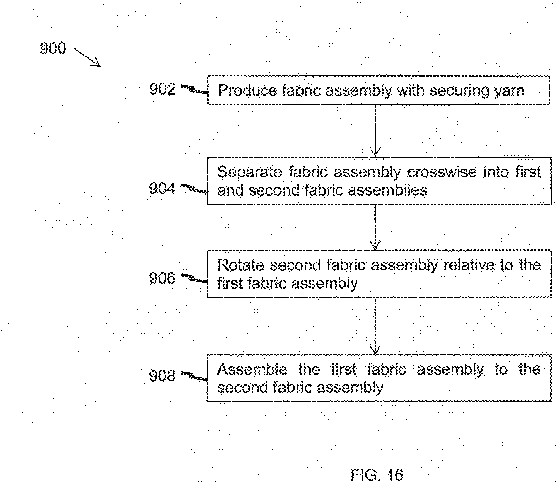

Figure 16 shows a method 900 for producing a multi-layer fabric, in accordance with an embodiment. The method 900 may produce the multi-layer fabric 700, 800 shown in Figures 13, 14, and 15.

At 902, a fabric assembly is produced having a securing yarn running in a single direction (for example the fabric assembly as described with reference to Figures 1, 2, 6, or 7).

At 904, the fabric assembly is separated (e.g. by cutting) crosswise (e.g. perpendicularly to the securing yarn) into first and second fabric assembly sections (e.g. 702, 718 or 802, 804).

At 906, the first fabric assembly (702, 802) is rotated (e.g. by 90 degrees) to the second fabric assembly (718, 804).

At 908, the first fabric assembly (702, 802) is assembled with the second fabric assembly (718, 804).

As the first and second fabric assemblies (702, 718, 802, 804) may be produced in a single-step production, costs may be reduced as single directional stitching of the securing yarn is performed.

Table A shows trauma for two Kevlar KM2 PLUS test materials measured in accordance with NIJ ballistic standard 0101.06 at velocities of 1400-1450 ft/sec or 427-442 m/sec and recorded in mm. Table A shows the results for a "standard 0 degree" multi-layer fabric having eight fabric assemblies of four layers with securing yarns running through the four layers and the securing yarns running parallel to each other for all eight fabric assemblies. Table A also shows the results of the same test for a "0-90 degree alternating layer" multi-layer fabric that has eight fabric assemblies of four layers with securing yarns alternating direction by 90 degrees after each layer.

**TABLE A**

| **Samples** | **Shot #1** | **Shot #2** | **Shot #3** | **Shot #4** | **Average(mm)** |
|---|---|---|---|---|---|
| Standard 0 degree | 34 | 34 | 38 | 42 | **37** |
| 0-90 degree alternating layer | 30 | 27 | 34 | 27 | **29.5** |

Table B shows trauma for four Kevlar KM2 PLUS test materials measured in accordance with NIJ ballistic standard 0101.06 at velocities of 1400-1450 ft/sec or 427-442 m/sec and recorded in mm. Table B shows the results for a "standard 0 degree" multi-layer fabric (of a different material to that of Table A) having eight fabric assemblies of four layers with securing yarns running through the four layers and the securing yarns running parallel to each other for all eight assemblies.

Table B also shows the results for a "0-90 degree every 2-4-2" multi-layer fabric having eight fabric assemblies of four layers. The multi-layer fabric is arranged such that the securing yarns in the first two fabrics are parallel, the securing yarns in the third through sixth fabrics are perpendicular to the securing yarns in the first two fabric assemblies and the securing yarns in the seventh and eight fabric assemblies are parallel to the securing yarns in the first two fabric assemblies (and perpendicular to the securing yarns in the third through sixth layers).

Table B also shows the results for a "0-90 degree every 3-2-3" multi-layer fabric having eight fabric assemblies of four layers. The multi-layer fabric is arranged such that the securing yarns in the first three fabrics are parallel, the securing yarns in the fourth and fifth fabrics are perpendicular to the first three fabric assemblies, and the securing yarns in the sixth through eighth fabric assemblies are parallel to the securing yarns in the first three fabric assemblies (and perpendicular to the securing yarns in the fourth and fifth layers).

**TABLE B**

| **Samples** | **Shot #1** | **Shot #2** | **Shot #3** | **Shot #4** | **Average(mm)** |
|---|---|---|---|---|---|
| Standard 0 degree | 36 | 41 | 36 | 35 | **37.0** |
| 0-90 degree every 2-4-2 layers | 28 | 35 | 29 | 30 | **30.5** |
| 0-90 degree every 3-2-3 layers | 30 | 34 | 35 | 32 | 32.8 |

As can be seen from Tables A and B, when the securing yarn directions are alternated, the average trauma depth is decreased indicating a stronger fabric. Further, the "0-90 degree every 2-4-2 layers" fabric may exhibit improved trauma capacity over the "0-90 degree every 3-2-3 layers" fabric.

While some improvements may be achievable through post process sewing of the components in a final assembly (e.g. a vest package), in the method 900 there may not be additional post processing such as post process sewing that may result in damaging the yarns in the fabric as well as making the pack much more stiff and not as comfortable to wear. Alternating layer designs as described with reference to Figures 13-16 may improve the trauma performance while maintaining the V50 performance. In contrast, where there is post process assembly, Trauma enhancement may be achieved at the expense of lowering V50.

In some embodiments, one or more woven multi-layer fabrics as generally described herein may be suitable for other types of threats, such as stab or spike threats. For example, some woven multi-layer fabrics may be suitable against stab or spike threats in addition to (or as an alternative to) being effective against ballistic threats.

In particular, there is a need, especially in fields like law enforcement and for use in correctional facilities (i.e., jails, prisons, etc.), for protective clothing that provides some protection for a wearer against penetration of a variety of dangerous instruments, such as blades, picks, shanks, awls, and the like.

Some protective clothing is designed to be resistant to either stabbing materials (i.e., ice picks, knives and the like), or ballistic threats, but not both. In some circumstances, however, it may not be practical or safe to be protected from only one of these threats. Nor may it be practical to wear multiple layers of protective wear, with each individual layer is designed for a different threat, since this may be bulky or uncomfortable.

Several known approaches to protect against both stabbing and ballistic threats are problematic. One typical prior art approach is to simply add stab resistant materials to ballistic resistant fabrics. For example, a stab resistant metal sheet (such as a titanium sheet) could simply be secured to a ballistic resistant fabric. However, such constructions tend to be bulky and may be uncomfortable to the point of being impractical.

According to some embodiments as described herein, at least some level of protection against non-ballistic threats may be provided by some woven multi-layer fabrics. For instance, the properties of the woven multi-layer fabric (i.e. yarn types) as well as the spacing and arrangement of weaving patterns may be selected to provide for at least some protection against stab and/or spike threats.

In some cases, these same fabrics may also provide for ballistic protection, although this is not necessarily required. In some examples, the securing yarns may be made of non-ballistic yarns (i.e., Nylon), while the warp yarns and weft yarns may be made of aramid (e.g. Kevlar®). In other examples, the securing yarns and the warp yarns and weft yarns may be made of any suitable combination of ballistic or non-ballistic yarns.

In some embodiments, the cover factor of each layer of the woven multi-layer fabric may be selected so as to inhibit penetration by non-ballistic threats, such as spikes and blades. For example, in one embodiment, a woven multi-layer fabric may be provided which has a cover factor between 70% and 130% for at least one of the layers of fabric. In another embodiment, a woven multi-layer fabric may be provided which has a cover factor between 80% and 120% for at least one of the layers of fabric. In another embodiment, a woven multi-layer fabric may be provided which has a cover factor between 90% and 110% for at least one of the layers of fabric. In yet another embodiment, a woven multi-layer fabric may be provided which has a cover factor around 100% for at least one of the layers of fabric. In yet other embodiments, both layers of a woven multi-layer fabric with two layers will have a cover factor of between 90 and 110%.

Selecting a cover factor in this manner will tend to encourage penetration resistance of the fabric.

In some embodiments, the desired cover factor might be achieved according to particular weaving patterns and techniques.

In some embodiments, the properties of the yarns and/or processes applied to the fabric could be selected to promote a desired cover factor for each layer. For instance, in some embodiments, after the fabric has been woven, the fabric could be subjected to a treatment process that encourages the securing yarns to shrink, which tends to draw the warp and weft yarns toward each other I the woven multi-layer fabric, thus encouraging higher cover factors.

In one specific example, securing yarns could be encouraged to shrink by up to 1%, up to 3%, more than 3%, or even up to 10%.

In some embodiments, once a woven multi-layer fabric has been woven, the fabric may be subjected to a process to increase the penetration resistance of the fabric. For example, this may be done by densifying the fabric, in some cases through a minimum of at least about 1% shrinkage. Shrinkage of the fabric during densification tends to engage a greater number of fibers in a particular area and increase the penetration resistance of the fabric.

In other cases, penetration resistance may be increased by fibrillating the yarns of the fabric, or using other techniques.

As described in detail above, in some embodiments, some of the warp yarns and/or weft yarns of the different layers of a woven multi-layer fabric may at least partially overlap. In some embodiments, the overlap amount P of the woven multi-layer fabric may be selected so as encourage penetration resistance to non-ballistic threats. For example, the overlap amount P may be between 10% and 95%. In other embodiments, the overlap amount P is between 30% and 70%. In other embodiments, the overlap amount is around 50%.

In some embodiments that may be well suited for non-ballistic threats, the overlap amount P may be between about 90 and 95%. In some other embodiments that may be well suited for non-ballistic threats, the overlap amount P may be above 95%. In some further embodiments, the overlap amount P may be above 98%, or even 99%, or even approaching (or at) 100%.

Configuring the woven multi-layer fabrics in this manner (i.e., adjusting the cover factor of the layers and/or the overlap amount P) may allow certain fabrics to be effective against non-ballistic threats. Moreover, some of these fabrics may be effective against both ballistic and non-ballistic threats, making them "multi-threat" fabrics.

While the above description provides examples of one or more fabrics and processes according to the present invention, it will be appreciated that other fabrics and processes may be within the scope of the present claims.

## Claims

1. A multi-layer ballistic woven fabric (700), comprising:
a. a first fabric assembly (702) comprising:
i. a first upper woven layer (704) having first upper warp yarns (708) and first upper weft yarns (706) that are interwoven together to form the first upper woven layer;
ii. a first lower woven layer (710) having first lower warp yarns (714) and first lower weft yarns (712) that are interwoven together to form the first lower woven layer; and
iii. first securing yarns (716) interwoven with at least some of the first upper yarns (706,708) and some of the first lower yarns (712,714) so as to secure the first upper and first lower woven layers (704,710) together; and
b. a second fabric assembly (718) layered with the first fabric assembly (702), the second fabric assembly comprising:
i. a second upper woven layer (720) having second upper warp yarns (722) and second upper weft yarns (724) that are interwoven together to form the second upper woven layer;
ii. a second lower woven layer (726) having second lower warp yarns (728) and second lower weft yarns (730) that are interwoven together to form the second lower woven layer; and
iii. second securing yarns (732) interwoven with at least some of the second upper yarns (722,724) and some of the second lower yarns (728,730) so as to secure the second upper and second lower woven layers (720,732) together;
**characterized in that** the first fabric assembly (702) is arranged so that the first securing yarns (716) run in a first direction and the second fabric assembly (718) is arranged so that the second securing yarns (732) run in a second direction, the second direction being different than the first direction; and **in that** the woven fabric further comprises six additional fabric assemblies, wherein the six additional fabric assemblies are arranged with the first and the second fabric assemblies (702,718) so that the fabric assemblies alternate between having their respective securing yarns running in the first direction and having their respective securing yarns running in the second direction.

2. The fabric of claim 1, wherein the first and second securing yarns (716,732) run 90 degrees to each other.

3. The fabric of claim 1 or claim 2, wherein the first fabric assembly (702) has four woven layers secured by the first securing yarns (716) and the second fabric assembly (718) has four woven layers secured by the second securing yarns (732).

4. The fabric of any preceding claim wherein at least some of the securing yarns (716,732) are made of non-ballistic yarns.

5. The fabric of any preceding claim wherein at least some of the securing yarns (716,732) are made of ballistic yarns.

6. The fabric of any preceding claim wherein at least some of the warp yarns and weft yarns are made of ballistic yarns.

7. The fabric of any preceding claim wherein at least some of the warp yarns and weft yarns are made of non-ballistic yarns.

8. The fabric of any preceding claim, wherein the fabric (700) has a cover factor of between 70% and 130%.

## Patentansprüche

1. Ein mehrlagiges, ballistisches, gewebtes Gewebe (700), das Folgendes beinhaltet:
a. eine erste Gewebeanordnung (702), die Folgendes beinhaltet:
i. eine erste obere gewebte Schicht (704), die erste obere Kettgarne (708) und erste obere Schussgarne (706) aufweist, die miteinander verwoben sind, um die erste obere gewebte Schicht zu bilden;
ii. eine erste untere gewebte Schicht (710), die erste untere Kettgarne (714) und erste untere Schussgarne (712) aufweist, die miteinander verwoben sind, um die erste untere gewebte Schicht zu bilden; und
iii. erste Fixierungsgarne (716), die mit mindestens einigen der ersten oberen Garnen (706, 708) und einigen der ersten unteren Garnen (712, 714) verwoben sind, sodass die erste obere und die erste untere gewebte Schicht (704, 710) aneinander fixiert sind; und
b. eine zweite Gewebeanordnung (718), die mit der ersten Gewebeanordnung (702) geschichtet ist, wobei die zweite Gewebeanordnung Folgendes beinhaltet:
i. eine zweite obere gewebte Schicht (720), die zweite obere Kettgarne (722) und zweite obere Schussgarne (724) aufweist, die miteinander verwoben sind, um die zweite obere gewebte Schicht zu bilden;
ii. eine zweite untere gewebte Schicht (726), die zweite untere Kettgarne (728) und zweite untere Schussgarne (730) aufweist, die miteinander verwoben sind, um die zweite untere gewebte Schicht zu bilden; und
iii. zweite Fixierungsgarne (732), die mit mindestens einigen der zweiten oberen Garnen (722, 724) und einigen der zweiten unteren Garnen (728, 730) verwoben sind, sodass die zweite obere und die zweite untere gewebte Schicht (720, 732) aneinander fixiert sind;
**dadurch gekennzeichnet, dass**
die erste Gewebeanordnung (702) derart ausgerichtet ist, dass die ersten Fixierungsgarne (716) in eine erste Richtung verlaufen, und die zweite Gewebeanordnung (718) derart ausgerichtet ist, dass die zweiten Fixierungsgarne (732) in eine zweite Richtung verlaufen, wobei die zweite Richtung von der ersten Richtung verschieden ist;
und dass das gewebte Gewebe ferner sechs zusätzliche Gewebeanordnungen beinhaltet, wobei die sechs zusätzlichen Gewebeanordnungen derart auf die erste und die zweite Gewebeanordnung (702, 718) ausgerichtet sind, dass die Gewebeanordnungen zwischen dem Verlaufen ihrer jeweiligen Fixierungsgarne in der ersten Richtung und dem Verlaufen ihrer jeweiligen Fixierungsgarne in der zweiten Richtung abwechseln.

2. Gewebe gemäß Anspruch 1, wobei das erste und das zweite Fixierungsgarn (716, 732) in einem Winkel von 90 Grad zueinander verlaufen.

3. Gewebe gemäß Anspruch 1 oder Anspruch 2, wobei die erste Gewebeanordnung (702) vier gewebte Schichten aufweist, die durch die ersten Fixierungsgarne (716) fixiert sind, und die zweite Gewebeanordnung (718) vier gewebte Schichten aufweist, die durch die zweiten Fixierungsgarne (732) fixiert sind.

4. Gewebe gemäß einem der vorhergehenden Ansprüche, wobei mindestens einige der Fixierungsgarne (716, 732) aus nicht-ballistischen Garnen bestehen.

5. Gewebe gemäß einem der vorhergehenden Ansprüche, wobei mindestens einige der Fixierungsgarne (716, 732) aus ballistischen Garnen bestehen.

6. Gewebe gemäß einem der vorhergehenden Ansprüche, wobei mindestens einige der Kettgarne und Schussgarne aus ballistischen Garnen bestehen.

7. Gewebe gemäß einem der vorhergehenden Ansprüche, wobei mindestens einige der Kettgarne und Schussgarne aus nicht-ballistischen Garnen bestehen.

8. Gewebe gemäß einem der vorhergehenden Ansprüche, wobei das Gewebe (700) einen Abdeckfaktor zwischen 70 % und 130 % aufweist.

## Revendications

1. Un tissu tissé balistique multicouche (700), comprenant :
a. un premier ensemble tissu (702) comprenant :
i. une première couche tissée supérieure (704) ayant des premiers fils de chaîne supérieurs (708) et des premiers fils de trame supérieurs (706) qui sont entrelacés ensemble pour former la première couche tissée supérieure ;
ii. une première couche tissée inférieure (710) ayant des premiers fils de chaîne inférieurs (714) et des premiers fils de trame inférieurs (712) qui sont entrelacés ensemble pour former la première couche tissée inférieure ; et
iii. des premiers fils de fixation (716) entrelacés avec au moins certains des premiers fils supérieurs (706, 708) et certains des premiers fils inférieurs (712, 714) de façon à fixer les premières couches tissées supérieure et inférieure (704, 710) ensemble ; et
b. un deuxième ensemble tissu (718) organisé en couches avec le premier ensemble tissu (702), le deuxième ensemble tissu comprenant :
i. une deuxième couche tissée supérieure (720) ayant des deuxièmes fils de chaîne supérieurs (722) et des deuxièmes fils de trame supérieurs (724) qui sont entrelacés ensemble pour former la deuxième couche tissée supérieure ;
ii. une deuxième couche tissée inférieure (726) ayant des deuxièmes fils de chaîne inférieurs (728) et des deuxièmes fils de trame inférieurs (730) qui sont entrelacés ensemble pour former la deuxième couche tissée inférieure ; et
iii. des deuxièmes fils de fixation (732) entrelacés avec au moins certains des deuxièmes fils supérieurs (722, 724) et certains des deuxièmes fils inférieurs (728, 730) de façon à fixer les deuxièmes couches tissées supérieure et inférieure (720, 732) ensemble ;
**caractérisé en ce que**
le premier ensemble tissu (702) est agencé de sorte que les premiers fils de fixation (716) s'étendent dans une première direction et le deuxième ensemble tissu (718) est agencé de sorte que les deuxièmes fils de fixation (732) s'étendent dans une deuxième direction, la deuxième direction étant différente de la première direction ;
et **en ce que** le tissu tissé comprend en outre six ensembles tissus supplémentaires, les six ensembles tissus supplémentaires étant agencés avec les premier et deuxième ensembles tissus (702, 718) de sorte que les ensembles tissus alternent entre le fait d'avoir leurs fils de fixation respectifs qui s'étendent dans la première direction et le fait d'avoir leurs fils de fixation respectifs qui s'étendent dans la deuxième direction.

2. Le tissu de la revendication 1, dans lequel les premier et deuxième fils de fixation (716, 732) s'étendent à 90 degrés l'un par rapport à l'autre.

3. Le tissu de la revendication 1 ou de la revendication 2, dans lequel le premier ensemble tissu (702) a quatre couches tissées fixées par les premiers fils de fixation (716) et le deuxième ensemble tissu (718) a quatre couches tissées fixées par les deuxièmes fils de fixation (732).

4. Le tissu de n'importe quelle revendication précédente dans lequel au moins certains des fils de fixation (716, 732) sont constitués de fils non balistiques.

5. Le tissu de n'importe quelle revendication précédente dans laquelle au moins certains des fils de fixation (716, 732) sont constitués de fils balistiques.

6. Le tissu de n'importe quelle revendication précédente dans lequel au moins certains des fils de chaîne et des fils de trame sont constitués de fils balistiques.

7. Le tissu de n'importe quelle revendication précédente dans lequel au moins certains des fils de chaîne et des fils de trame sont constitués de fils non balistiques.

8. Le tissu de n'importe quelle revendication précédente, Le tissu (700) ayant un facteur de couverture compris entre 70 % et 130 %.
